(19) Europäisches Patentamt
European Patent Office
Office européen des brevets

(11) **EP 2 941 133 B1**

(12) **EUROPEAN PATENT SPECIFICATION**

(45) Date of publication and mention
of the grant of the patent:
**16.11.2016 Bulletin 2016/46**

(51) Int Cl.:
*A23L 29/262* (2016.01)     *A23L 29/256* (2016.01)
*A23G 9/34* (2006.01)     *A23L 2/52* (2006.01)

(21) Application number: **13815653.4**

(22) Date of filing: **17.12.2013**

(86) International application number:
**PCT/US2013/075604**

(87) International publication number:
**WO 2014/107293 (10.07.2014 Gazette 2014/28)**

(54) **STABILIZER COMPOSITION FOR FOOD AND BEVERAGE PRODUCTS**

STABILISATORZUSAMMENSETZUNG FÜR LEBENSMITTEL- UND GETRÄNKEPRODUKTE

COMPOSITION STABILISANTE POUR PRODUITS ALIMENTAIRES ET BOISSONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2013 US 201361748481 P**

(43) Date of publication of application:
**11.11.2015 Bulletin 2015/46**

(73) Proprietor: **Dow Global Technologies LLC
Midland, MI 48674 (US)**

(72) Inventors:
• **ADDEN, Anne
29664 Walsrode (DE)**
• **ADDEN, Roland
29664 Walsrode (DE)**

• **HUEBNER-KEESE, Britta
NI 31311Uetze (DE)**

(74) Representative: **f & e patent
Fleischer, Engels & Partner mbB, Patentanwälte
Braunsberger Feld 29
51429 Bergisch Gladbach (DE)**

(56) References cited:
**GB-A- 2 395 413     US-A- 5 215 777
US-A1- 2009 142 469     US-A1- 2011 033 599**

• **DATABASE FSTA [Online] INTERNATIONAL
FOOD INFORMATION SERVICE (IFIS),
FRANkFURT-MAIN, DE; 1996, TVOROGOVA A A
ET AL: "Stabilizers for ice cream.", XP002722707,
Database accession no. FS-1996-11-P-0122**

**Description**

FIELD

The present invention relates to a stabilizer composition for food and beverage products as well as to food and beverage products comprising the components of the stabilizer composition.

INTRODUCTION

Many instant and ready-to-eat/drink food and beverage products comprise stabilizers to prevent separation of the individual ingredients of the food and beverage products upon storage, for example to prevent solid/liquid separation caused by sedimentation of solid ingredients from a suspension or to prevent liquid/liquid separation caused by differences in hydrophilicity or hydrophobicity of liquid ingredients.

The stabilizer should not affect the organoleptic properties in a negative way. Consumers generally desire a creamy mouth-feel, richness and sweetness in flavored beverages, such as coffees, hot chocolates, teas, creamy juice drinks, or milk shakes, or in liquid or semi-liquid food products, such as mayonnaise, salad dressings, sauces, gravies, puddings, and mousses. These attributes are usually delivered by commercially prepared creamers, or hydrocolloids, pectins, and/or starches. Alternatively, food or beverage products may be formulated to contain high solid contents. The use of methylcellulose in food compositions, such as cultured dairy products like ice creams, is disclosed in European Patent No. EP 1 171 471 and the prior art cited therein. Unfortunately, it has been found that in some frozen food products methylcellulose does not provide sufficient freeze-thaw stability.

US Patent No. 6,673,384 discloses a creamy mouth-feel agent for food and beverage products which comprises a water-insoluble component and a water-soluble component. The water-insoluble component comprises at least 60% of the total solids of the creamy mouth-feel agent. The water-insoluble component comprises (a) 5 - 70%, preferably 10 - 50% of a microparticulate component; (b) 0 - 60%, preferably 20 - 40% of a fat/oil component; (c) 0 - 5%, preferably 0.5 - 3% of an emulsifier component; and (d) 0- 5%, preferably 0 - 3% of a microcrystalline cellulose component. The water-soluble component comprises (a) 0.05 - 40%, preferably 0.05 - 20% of a thickener, (b) 0 - 10%, preferably 0 - 8% sodium caseinate; (c) 0 - 40%, preferably 0 - 20% milk solids; and (d) 0 - 4%, preferably 0 - 2% processing aids. The thickener is selected from locust bean gum, guar gum, gellan gum, xanthan gum, gum ghatti, modified gum ghatti, tragacanth gum, carrageenan, carboxymethylcellulose, sodium carboxymethylcellulose, corn starch, wheat starch, tapioca starch, pregelatinized high amylose-content starch, pregelatinized hydrolyzed starches, maltodextrins, corn syrup solids, chemically-modified starches, and mixtures thereof.

International patent application WO2012/152908 discloses the use of a dairy composition comprising a) milk, b) cream, c) a polyol, d) an emulsifier, e) optionally a gelling and/or thickening agent, and f) optionally a taste additive, such as sugar for preparing a frozen composition. The gelling and/or thickening agent can be for example gelatin, a carrageenan, a locust bean gum, an alginate, a pectin, a xanthan gum or a mixture or an association thereof. WO2012/152908 discloses that such a dairy composition allows good usage properties when frozen, including a very good ability to be scooped and/or a low crystallization, as well as good properties when stored at fresh temperature, including stability.

US 5 215 777A discloses a low fat ice cream composition comprising a stabilizer composition which comprises guar gum, carrageenan (8.77 weight percentage based on total weight of stabilizer), locust bean gum, microcrystalline cellulose, carboxymethyl cellulose (5.26 weight percentage based on total weight of stabilizer) and xanthan gum.

GB 2 395 413A teaches a combination of methylcellulose (90%) and carrageenan (9.1 %) in beverages with solid particles in suspension.

US 2009/142469 A1 describes a combination of microcrystalline cellulose with carboxymethyl cellulose and carrageenan in protein-free stable creamers.

US 2011/033599 A1 discloses gelled alcoholic products comprising sodium carboxyl methyl cellulose and carrageenan.

A combination of locust bean gum, guar, and carrageenan or a combination of sodium carboxymethyl cellulose (CMC), guar, and carrageenan is commonly used as stabilizer in ice creams, see Arbuckle, W.S. "Ice Cream" 4th edition, 1986, chapter 6, pp 84-92. These thickeners are recommended individually or in combination in US Patent No. 6,673,384 and in WO2012/152908. Unfortunately, such stabilizer composition does not provide a sufficiently high overrun when it is incorporated into food and beverage products comprising entrained air, such as mousses, or frozen food like ice creams. The overrun is a measure how much air is incorporated in the food and beverage products. A high overrun is liked by the consumers in food and beverage products that comprise entrained air.

Accordingly, one object of the present invention is to provide a new stabilizer for food and beverage products. It would be particularly desirable to provide a new stabilizer that allows the production of food and beverage products having a higher overrun and/or a higher freeze-thaw stability than known stabilizers or stabilizer compositions.

Moreover, it would be particularly desirable to provide a new stabilizer that does not provide a major negative impact on the organoleptic properties of the food and beverage products.

SUMMARY

Surprisingly, a new stabilizer composition for food and beverage products has been found that allows the production of food and beverage products having a high overrun and a high freeze-thaw stability and that does not provide a major negative impact on the organoleptic properties of the food and beverage products.
One aspect of the present invention is a stabilizer composition for food and beverage products which comprises (a) from 15 to 85 weight percent of a methylcellulose, (b) from 10 to 80 weight percent of a carboxymethyl cellulose, and (c) from 5 to 20 weight percent of a carrageenan, all percentages being based on the total weight of (a), (b) and (c).
Another aspect of the present invention is a food or beverage product which comprises (a) from 0.02 to 0.30 weight percent of a methylcellulose, (b) from 0.03 to 0.30 weight percent of a carboxymethyl cellulose, and

(c) from 0.01 to 0.1 weight percent of a carrageenan, all percentages being based on the total weight of the food or beverage product.

DESCRIPTION OF EMBODIMENTS

The stabilizer composition of the present invention comprises (a) from 15 to 85, preferably from 20 - 70, more preferably from 30 - 60, even more preferably from 40 - 50, and most preferably about 45 weight percent of a methylcellulose, (b) from 10 to 80, preferably from 20 - 70, more preferably from 30 - 60, even more preferably from 40 - 50, and most preferably about 45 weight percent of a carboxymethyl cellulose, and (c) from 5 to 20, preferably from 6 - 15, more preferably from 7 - 12, and most preferably about 10 weight percent of a carrageenan, all percentages being based on the total weight of (a), (b) and (c). The sum of the weights of components (a), (b) and (c) preferably amounts to at least 60, more preferably at least 70, and most preferably at least 80 percent of the total weight of the stabilizer composition. The sum of the weights of components (a), (b) and (c) amounts up to 100, typically up to 95 percent of the total weight of the stabilizer composition.
The weight ratio between the component (a) and component (b) in the stabilizer composition of the present invention, $w(a)/w(b)$, is preferably at least 0.35 / 1.0, more preferably at least 0.6 / 1.0, even more preferably at least 0.7 / 1.0, and most preferably at least 0.8 /1.0. The weight ratio $w(a)/w(b)$ is preferably up to 5.0 / 1.0, more preferably up to 2.0 / 1.0, even more preferably up to 1.5 / 1.0, and most preferably up to 1.2 / 1.0.
In the present invention, methylcellulose is an essential component (a) of the stabilizer composition. The methylcellulose is a derivative of cellulose. Cellulose consists of anhydroglucose units joined by 1-4 linkages. Each anhydroglucose unit contains hydroxyl groups at the 2, 3, and 6 positions. Partial or complete substitution of these hydroxyl groups creates cellulose derivatives. For example, treatment of cellulosic fibers with caustic solution, followed by a methylating agent, yields cellulose ethers substituted with one or more methoxyl groups. If not further substituted with other groups, this cellulose derivative is known as methylcellulose. The methylcellulose preferably has a DS(methyl) of from 1.50 to 2.25, more preferably from 1.55 to 2.20, and most preferably from 1.60 to 2.10. The degree of the methoxyl substitution, DS(methoxyl), of a methylcellulose is the average number of OH groups substituted with methoxyl groups per anhydroglucose unit. The determination of the % methoxyl in methylcellulose is carried out according to the United States Pharmacopeia (USP 34). The values obtained are % methoxyl. These are subsequently converted into degree of substitution (DS) for methoxyl substituents.
The methylcellulose preferably has a viscosity of from 20 to 100,000 mPa·s, more preferably from 150 to 80,000 mPa·s, even more preferably from 500 to 60,000 mPa·s, especially preferably from 700 to 25,000 mPa·s, and most preferably from 1000 to 10,000 mPa·s, determined in a 2 % by weight aqueous solution at 20°C according to ASTM D 445-03 using an Ubbelohde capillary viscometer as specified in ASTM D 446-07. A carboxymethyl cellulose is a essential component (b) of the stabilizer composition of the present invention. The term "carboxymethyl cellulose" or "CMC" as used herein encompasses cellulose substituted with groups of the formula $-CH_2CO_2A$, wherein A is hydrogen or a monovalent cation, such as $K^+$ or preferably $Na^+$. Preferably the carboxymethyl cellulose is in the form of its sodium salt, i.e., A is $Na^+$. Preferred types of CMC have a $DS_{carboxymethoxyl}$ of from 0.2 to 1.4, more preferably of from 0.4 to 1.2, and most preferably of from 0.60 to 1.0. The term "$DS_{carboxymethoxyl}$" refers to the degree of carboxymethoxyl substitution per anhydroglucose unit and means the average number of OH groups substituted with carboxymethoxyl groups per anhydroglucose unit. The $DS_{carboxymethoxyl}$ is measured according to ASTM D 1439-03 "Standard Test Methods for Sodium Carboxymethyl-cellulose; Degree of Etherification, Test Method B: Nonaqueous Titration". The CMC can be utilized in various forms in the present invention, such as in powder form or in the form of agglomerates. A way of producing CMC in the form of agglomerates is described in the International Patent Publication WO 2010/117781.
The CMC generally has a viscosity of up to 60,000 mPa•s, preferably up to 50,000 mPa•s, more preferably up to 40,000 mPa•s, and most preferably up to 35,000 mPa•s, measured as a 2 weight percent aqueous solution at 20 °C using a Haake Viscotester VT550 with a cylinder system, cup MV, at 2.55 s$^{-1}$, which is commercially available from Thermo Electron, Germany.

The viscosity of the CMC is generally 2000 mPa•s or more, preferably 3000 mPa•s or more, more preferably 5000 mPa•s or more, and most preferably 8000 mPa•s or more, measured as indicated above. Examples of commercially available CMCs that are useful in the present invention include Walocel CRT 10000 PA, CRT 20000 PA and CRT 30000 PA (DS$_{carboxymethoxyl}$ = 0.82-0.95; 2 % by weight viscosity = 10,000 mPa·s, 20,000 mPa·s and 30,000 mPa·s, respectively), available from The Dow Chemical Company.

A carrageenan is an essential component (c) of the stabilizer composition of the present invention. There are three main commercial classes of carrageenan: kappa carrageenan, iota carrageenan, and lambda carrageenan. Kappa carrageenan forms strong, rigid gels in the presence of potassium ions; it reacts with dairy proteins. Kappa carrageenan is preferred, although the present invention is not limited to its use. There are three types of industrial processing for recovering carrageenans: semi-refined, refined and mixed processing. Carrageenans recovered by any of these processes are useful in the present invention.

The stabilizer composition of the present invention may comprise optional additives (d), such as salts, like potassium chloride, sodium chloride or calcium sulphate; glucose, or water. The amount of such optional additives preferably is from 1 to 40, more preferably from 3 to 30, and most preferably from 3 to 20 weight percent, based on the total weight of the stabilizer composition of the present invention.

Another aspect of the present invention is a food or beverage product which comprises (a) from 0.02 to 0.30, preferably from 0.04 to 0.26, and most preferably from 0.06 to 0.23 weight percent of a methylcellulose, (b) from 0.03 to 0.30, preferably from 0.04 to 0.28, and most preferably from 0.06 to 0.26 weight percent of a carboxymethyl cellulose, and (c) from 0.01 to 0.1, preferably from 0.02 to 0.07, and most preferably from 0.02 to 0.05 weight percent of a carrageenan, all percentages being based on the total weight of the food or beverage product. The components (a), (b), and (c) are described on more details above.

The food or beverage product of the present invention preferably comprises from 0.02 to 2, more preferably from 0.05 to 1, and most preferably from 0.1 to 0.6 weight percent of the stabilizer composition of the present invention, based on the total weight of the food or beverage product of the present invention.

In one embodiment the food or beverage product of the present invention comprises from 5 to 50 weight percent, preferably from 7 to 40 weight percent, and more preferably from 10 to 35 weight percent of one or more mono-, di- and/or oligosaccharides, based on the total weight of the food or beverage product of the present invention. Useful monosaccharides have the elemental chemical formula $C_xH_{2x}O_x$, where x is at least 3, preferably from 3 to 7, more preferably 4, 5 or 6, and most preferably 6. Preferred monosaccharides are glucose and fructose. Useful disaccharides are, for example, lactose, maltose and sucrose. Sucrose, commonly also designated as saccharose, is preferred. Oligosaccharides have 3 to 10, preferably 3 to 7, monosaccharide units linked by glycosidic bonds. Examples of oligosaccharides are fructo-oligosaccharides, such as fructans, or galacto-oligosaccharides, or manno-oligosaccharides, or galactomanno-oligosaccharides, or gluco-oligosaccharides, such as maltodextrins or cyclodextrins or cellodextrins. The food or beverage product of the present invention can comprise more than one type of mono-, di- and/or oligosaccharides. The above stated weight ranges relate to the total weight of the mono-, di- and/or disaccharides. Preferred examples of mono-, di- and/or oligosaccharides are listed in the Council Directive 2001/111/EC of 20 December 2001 relating to certain sugars intended for human consumption, as published in the Official Journal of the European Communities L 10/53, 12.1.2002, such as semi-white sugar, (white) sugar, dried glucose syrup, dextrose, dextrose monohydrate, anhydrous dextrose or fructose. These sugars can be in solid or liquid form. Council Directive 2001/111/EC lists sugar solution, invert sugar solution, invert sugar syrup or glucose syrup. The sugar solution, invert sugar solution and invert sugar syrup are characterized by dry matter of not less than 62% by weight.

In one embodiment the food or beverage product of the present invention comprises from 1 to 20 weight percent, preferably from 2 to 15 weight percent, and more preferably from 3 to 10 weight percent of one or more proteins, based on the total weight of the food or beverage product of the present invention. Preferred sources for the protein which may be used in the present invention include dairy protein sources, such as whole milk, skim milk, condensed milk, evaporated milk, milk solids non-fat, and mixtures thereof; whey protein isolate and whey protein concentrates, caseins, and mixtures thereof; vegetable proteins and vegetable protein sources such as soy, wheat, rice, canola, potato, corn, pea and mixtures thereof; and animal sources of protein including gelatin or egg proteins. The protein may be present as the isolated protein, as a protein concentrate or as a protein hydrolysate.

In one embodiment the food or beverage product of the present invention comprises from 1 to 25 weight percent, preferably from 2 to 20 weight percent, and more preferably from 3 to 15 weight percent of one or more milk solids not-fat, based on the total weight of the food or beverage product of the present invention. The term "milk solids not-fat" relates to the substances in milk other than butterfat and water; abbreviated as MSNF. They include casein, lactose, vitamins and minerals. The milk solids not-fat typically originates from animal milk, typically cow milk, but one can use alternative animal milks such as sheep milk or goat milk. Any type of animal milk can be used, such as full milk, partially or totally skimmed milk, or skimmed milk powder. If milk is present in the composition, it can be introduced completely or partly in a milk powder form. Milk substitutes can also be used, also referred to as vegetal milk, for example soya milk, oat milk, rice milk, almond milk, or a mixture thereof.

The food or beverage product of the present invention generally comprises from 0 to 30, preferably from 0 to 20 weight percent, more preferably from 0 to 15 weight percent, and most preferably from 0.5 to 6 weight percent of one or more fats, based on the total weight of the food or beverage product of the present invention. The term "fat" as used in the present application includes one type of fat as well as mixtures of different types of fat. The fats may be either solid or liquid at room temperature (23 °C), i.e. the term fat as used herein includes fats that are liquid at room temperature (typically called "oils" by the consumers) and fats that are solid at room temperature (typically called "fats" by the consumers). Fats within the meaning of the present invention are edible fatty acid triglycerides of natural origin as well as edible synthetic fatty acid triglycerides, fatty acid triglycerides of natural origin being preferred. Vegetable fats as well as animal fats, such as milk fat, may be used.

In one embodiment the food or beverage product of the present invention comprises from 0.05 to 0.7 weight percent, more preferably from 0.1 to 0.5 weight percent, and most preferably from 0.2 to 0.4 weight percent of an emulsifier, based on the total weight of the food or beverage product of the present invention. The term "emulsifier" as used in the present application includes one type of emulsifier as well as mixtures of different types of emulsifiers. Exemplary emulsifiers for use in the present invention include lecithin; hydroxylated lecithin; sodium stearoyl lactylat (SSL); mono, di, or polyglycerides of fatty acids such as glyceryl mono- and distearate (GMS) and polyglycerol esters of fatty acids (PGE) such as triglycerol monostearate (TGMS); polyoxyethylene ethers of fatty esters of polyhydric alcohols such as the polyoxythylene ethers of sorbitan monostearate (Tween 60) or the polyoxyethylene ethers of sorbitan distearate; fatty esters of polyhydric alcohols such as sorbitan monostearate; mono- and diesters of glycols such as propylene glycol monostearate and propylene glycol monopalmitate; sucrose esters; and the esters of carboxylic acids such as lactic, citric, and tartaric acids with the mono- and diglycerides of fatty acids, such as glycerol lacto palmitate and glycerol lacto stearate; and mixtures thereof.

In one embodiment the food or beverage product of the present invention comprises two or more of the above-mentioned components mono-, di- and/or oligosaccharides, proteins, milk solids not-fat, fats and emulsifier in combination, preferably in their preferred ranges as listed above.

Typically the food or beverage product of the present invention comprises from 30 to 90 weight percent, more typically from 40 to 80 weight percent, and most typically from 45 to 70 weight percent of water, based on the total weight of the food or beverage product of the present invention.

The food or beverage product of the present invention may comprise optional additives, such as colorants, preservatives, vitamins, or taste additives, such as flavors, perfumes, fruits or fruit extracts, nuts, sweetening agents different from mono-, di- and/or oligosaccharides, or acidity modifiers. Such optional additives and useful amounts are known in the art.

Preferred examples of the food or beverage products of the present invention are flavored beverages or liquid, semi-liquid or solid food products, preferably dairy products or non-dairy products, such as hot chocolates, creamy juice drinks, or milk shakes, puddings, mousses, mayonnaise, salad dressings or sauces. More preferably, the food or beverage product of the present invention is a food designed for frozen consumption or a frozen or semi-frozen food, more preferably a frozen or semi-frozen dessert, such as various types of ice creams including sherbets, low fat ice creams, soy ice creams, lupin ice creams, and cream ice creams.

Some embodiments of the invention will now be described in detail in the following Examples.

EXAMPLES

Unless otherwise mentioned, all parts and percentages are by weight. In the Examples the following test procedures and components are used.

Carboxymethyl Cellulose (CMC)

The utilized CMC (the sodium salt of carboxymethyl cellulose) had a degree of carboxymethoxyl substitution per anhydroglucose unit (DS) of about 0.9, measured according to ASTM D 1439-03 "Standard Test Methods for Sodium Carboxymethylcellulose; Degree of Etherification, Test Method B: Nonaqueous Titration" and a viscosity of about 20,000 mPa•s, measured as a 2 weight percent aqueous solution at 20 °C using a Haake Viscotester VT550 with a cylinder system, cup MV, at 2.55 s$^{-1}$, which is commercially available from Thermo Electron, Germany.

The CMC is commercially available as WALOCEL™ CRT 20,000 GA from the Dow Chemical Company or from Dow Wolff Cellulosics, Germany.

Methylcellulose (MC)

Food grade (FG) methylcelluloses were used as listed in Table 1 below. The methylcelluloses are commercially available from the Dow Chemical Company.

Table 1

| METHOCEL™ Product | Methoxyl Content, % | DS(methoxyl) | Viscosity of 2 % solution in water, mPa·s |
|---|---|---|---|
| METHOCEL™ A4C FG | 27.5 - 31.5 | 1.64 - 1.92 | 350-450 |
| METHOCEL™ A4M FG | 27.5 - 31.5 | 1.64 - 1.92 | 3700 - 4700 |
| METHOCEL™ A40M FG | 27.5 - 31.5 | 1.64 - 1.92 | 35,000 - 45,000 |

An ice cream mix was produced from the ingredients listed in Table 2. With the exception of the ingredients of the stabilizer composition, the composition of the ice cream mix is listed in Table 3 below. The ingredients of the stabilizer composition are disclosed further below individually for Examples 1-6 and Comparative Examples A-E.

Table 2

| Ingredient | Supplier |
|---|---|
| Vanilla aroma | Prova, France |
| Corn syrup (glucose/fructose syrup), dry mass 83-84% | sold under the trade name C*Sweet F01701 by Cargill, Sas Van Gent, the Netherlands |
| Cream | frischli Milchwerke GmbH, Germany |
| Dry milk powder | frischli Milchwerke GmbH, Germany |
| Granulated sugar (sucrose) | EDEKA, Germany |
| Emulsifier:<br>Mono- and diglycerides of fatty acids (E471) | Fluka-Analytical, Switzerland |
| Stabilizer components:<br>WALOCEL™ CRT 20,000 GA, abbreviated as "CMC"<br>METHOCEL™ A4C FG ("A4C")<br>METHOCEL™ A4M FG ("A4M")<br>METHOCEL™ A40M FG ("A40M")<br>Kappa (κ-) Carrageenan gum | The Dow Chemical Company, USA or Dow Wolff Cellulosics, Germany<br>The Dow Chemical Company<br>The Dow Chemical Company<br>The Dow Chemical Company<br>Fluka-Analytical, Switzerland |
| Guar Gum, Type: F-21 | C.E. Roeper GmbH, Germany |
| Locust Bean Gum | Locu zoon (Biozoon GmbH, Germany) |

Table 3

| Ingredients | Weight % | Fat | MSNF | Water | Protein | Carbohydrates |
|---|---|---|---|---|---|---|
| Cream | 10.0 | 3.0 | 0.6 | 6.0 | 0.2 | 0.3 |
| Sucrose | 11.0 | 0.0 | | 0.0 | 0.0 | 11.0 |
| Corn syrup | 7.2 | 0.0 | | 1.2 | 0.0 | 6.0 |
| Stabilizer composition | 0.3 | 0.0 | | 0.0 | 0.0 | 0.0 |
| Emulsifier | 0.2 | 0.0 | | 0.0 | 0.0 | 0.0 |
| Milk powder | 14.0 | 0.1 | 12.4 | 0.5 | 4.9 | 7.0 |
| Vanilla Aroma | 0.1 | 0.0 | | 0.0 | 0.0 | 0.0 |

(continued)

| Ingredients | Weight % | Fat | MSNF | Water | Protein | Carbohydrates |
|---|---|---|---|---|---|---|
| Water | 57.2 | 0.0 | | 57.2 | 0.0 | 0.0 |
| **Total** | **100.0** | **3.1** | **13.0** | **64.9** | **5.0** | **24.0** |
| MSNF: milk solids non-fat | | | | | | |

Production of Ice Cream

The ingredients listed in Table 2 above were weighed according to the recipe in Table 3, so that a total amount of 1600 g of the final ice cream formulation were obtained. Water, dry milk powder, and the emulsifier were mixed and then added to the bowl of a cooking machine (Thermomix TM 31, commercially available from Vorwerk, Germany). The mix was stirred at speed 2 for two minutes. Then the mix was heated up to 80 °C at speed 3.5 for about five minutes. The heating was done to ensure proper dissolution of the emulsifier and carrageenan. Sucrose and the stabilizer composition were blended and stirred to avoid lumping. As soon as the desired temperature of the Thermomix TM 31 cooking machine was reached the powdery ingredients were added. Finally, the liquid ingredients (cream, corn syrup, vanilla aroma) were added to the mix. The whole mixture was stirred and held at 80 °C for five minutes. Afterwards, the mix was stored at 70 °C and two more formulations of each 1600 g were prepared as described above. All mixes were combined yielding about 4800 g.

The liquid ice cream mix was then homogenized while still hot (70 °C) with a pressure of 170 bar (Homogenizer Niro Soavi S.p.A., GEA). Afterwards, the ice cream mix was pasteurized directly in an ice cream machine (CRM Telme, Italy) at 85 °C for 10 min. The ice cream machine was then cooling until the mix reached 4 °C. Subsequently, the ice cream mix was taken out of the machine and stored in the refrigerator (at 4 °C) for aging for 16 h as this improves the whipping qualities of the ice cream mix. Afterwards, the ice cream mix was frozen in the ice cream machine for 12 minutes. Then, the ice cream was filled into bottles and immediately put into the freezer at -18 °C for hardening. It was left in the freezer for at least 3 days before starting the analysis.

Example 1 and Comparative Example A

Ice cream mixes were prepared as described above comprising 0.3 wt.% of a stabilizer composition.

In Example 1 the stabilizer composition consisted of 72 wt.% of METHOCEL$^{TM}$ A4C FG methylcellulose, 18 wt.% WALOCEL™ CRT 20,000 GA carboxymethyl cellulose, and 10 wt.% of κ-carrageenan gum. The mix was left to stand at 4 °C for 16 hours. The mix remained homogeneous. No phase separation was observed.

In Comparative Example A the stabilizer composition consisted of 80 wt.% of METHOCEL™ A4C FG methylcellulose and 20 wt.% WALOCEL™ CRT 20,000 GA carboxymethyl cellulose. When the mix was left was stand at 4 °C for 16 hours, phase separation was observed.

Examples 2 - 5 and Comparative Examples B to E

Ice cream mixes were prepared as described above comprising 0.3 wt.% of a stabilizer composition as listed in Table 4 below. A Control Mix comprising no stabilizer was also prepared. Comparative Example E illustrates a combination of locust bean gum, guar, and κ-carrageenan which is commonly used as a stabilizer composition in ice creams. Comparative Example D makes use of CMC instead of the locust bean gum utilized in Comparative Example E. Comparative Example D also illustrates a stabilizer composition which is commonly used in ice creams. The components of the stabilizer compositions utilized in Comparative Examples D and E are recommended individually or in combination in the prior art discussed further above.

The compositions of the stabilizer composition as well as the % overrun and the melt-back of the ice creams prepared from the mixes are listed in Table 4 below.

Overrun of Ice Cream

The overrun describes the amount of entrained air in the frozen ice cream prepared as described above. The overrun can be calculated as: % overrun = 100 x (volume of frozen ice cream - volume of ice cream mix used to prepare the frozen ice cream) / volume of ice cream mix used to prepare the ice cream).

Melt-back Test of Ice Cream

Trials were conducted in a climate room at a constant temperature of 22 $\pm$ 2 ° C and a humidity of 55 $\pm$ 5%. 350 g $\pm$ 5g of a cylindrical ice cream block of a diameter of about 80 mm and a temperature of about - 19.2 °C $\pm$ 1.3 °C was put on a plastic grid comprising circular openings of 10 mm diameter, the centers of the circles being located 20 mm apart from each other. The grid was stored at -18 ° C before the measurement. In all trials the ice cream block had the same temperature and the same dimensions.

Below the grid, the dropping serum was collected in a petri-dish and weighed every 10 minutes for 180 minutes totally. The drained weight is based on the starting mass of the sample as a so called melt-back level is expressed as a percent at a given lapsed time.

$$Melt\ Back\ Level = \frac{Weight\ Serum}{Weight\ Ice\ Cream} * 100\%$$

Table 4

| (Comp.) Example | Stabilizer composition | Overrun [%] | Melt back test, % melted after x minutes | | | |
|---|---|---|---|---|---|---|
| | | | 30 min | 60 min | 120 min | 180 min |
| 2 | 45% A4M, 45% CMC, 10% κ-carrageenan | 57 | 2 | 29 | 78 | 94 |
| 3 | 72% A4M, 18% CMC, 10% κ-carrageenan | 65 | 2 | 29 | 80 | 96 |
| B | 90% A4M, 10% κ-carrageenan | 60 | 2 | 30 | 76 | 91 |
| 4 | 45% A40M, 45% CMC, 10% κ-carrageenan | 66 | 1 | 29 | 80 | 95 |
| 5 | 72% A40M, 18% CMC, 10% κ-carrageenan | 68 | 6 | 35 | 85 | 95 |
| C | 90% A40M, 10% κ-carrageenan | 67 | 0.2 | 20 | 67 | 85 |
| | | | 30 min | 60 min | 120 min | 180 min |
| D | 63% CMC, 27% Guar, 10% κ-carrageenan | 37 | nm | nm | nm | nm |
| E | 63% Locust Bean Gum, 27% Guar, 10% κ-carrageenan | 46 | 0.5 | 21 | 70 | 94 |
| Control Mix | --- | 22 | nm | nm | nm | nm |
| nm: not measured | | | | | | |

The results in Table 4 illustrate that all measured melt-back properties of all ice cream compositions of Examples 2 - 5 and Comparative Examples A - C and E are similar and meet the consumers' needs.

The ice cream compositions of Examples 2 - 5 have a substantially higher overrun than the ice cream compositions of Comparative Examples D and E. The ice cream compositions of Comparative Examples B and C have a similar overrun as the ice cream compositions of Examples 2 - 5; however, the ice cream compositions of Comparative Examples B and C are inferior in organoleptic properties than the ice cream compositions of Examples 2 - 5, as shown further below.

Freeze-Thaw stability of Ice Cream

Freeze-thaw stability is a critical parameter for customers. When ice cream is thawed to temperatures just slightly below the melting point and frozen again, growth of ice crystals is promoted. Large ice crystals lead to a sandy and rough mouth-feel which is undesired. In the freeze-thaw stability test, the ice cream is thawed and frozen again four times in a row (15 min at 22 °C and 45 min at -18 °C).

Mouth-feel was investigated with a trained panel with a triangle test according to ISO 4120:2004. This method is effective for determining that a perceptible difference results (test for difference) or a perceptible difference does not result (test for similarity) between two samples A and B. Assessors receive a set of three samples (i.e. a triad) and are informed that two of the samples are alike and one is different (designated as odd sample). The assessors report which sample they believe to be different even if the selection is based only on a guess (forced-choice-test). That means the report "no difference" is not allowed in this test. A minimum of 6 assessors is required for a test for difference. Replicate evaluations may be used if needed to produce a sufficient number of total evaluations.

An equal number of six possible sequences of two samples A and B is used:

ABB AAB ABA BAA BBA BAB

The samples were coded with three-digit-random numbers and distributed at random in groups of six among the assessors. Each sequence was used once among the first group of six assessors, then the next group and so on. The triads were presented simultaneously to the assessors. They were allowed to make repeated evaluations. About 30 g of each sample was served. The cold ice cream that had a temperature of -18 ° C was stored in a box made of Styrofoam™ foam with ice packs to keep it cold. As soon as the tasting started, the ice cream was poured into glasses and handed directly to the panelists. Water and plain bread (consisting only of wheat starch and water) were served as palate neutralizer. The test room was equipped according to the requirements of the German standard DIN 10962:1997. The assessors were selected, trained, and monitored according to the respective German standards (DIN 10961:1996-08, DIN 10959: 1998-07).

In the freeze-thaw stability test described above, the ice cream composition of Comparative Example B comprised noticeably more ice crystals after the freeze-thaw cycles, noticed as a sandier mouth-feel than the ice cream composition of Example 3. Of 7 trained assessors 6 noticed a difference between the ice cream compositions of Comparative Example B and of Example 3. The difference between these samples was statistically significant.

On the other hand, of 8 trained assessors only 4 noticed a difference between the ice cream compositions of Example 2 and of Example 3, while 4 trained assessors did not notice a difference. The difference between the ice cream compositions of Examples 2 and 3 was not statistically significant.

In the freeze-thaw stability test described above, the ice cream composition of Comparative Example C comprised more ice crystals after the freeze-thaw cycles than the ice cream composition of Example 4. Of 7 trained assessors 5 noticed a difference between the ice cream compositions of Comparative Example C and of Example 4. The difference between these samples was statistically significant. Most of the assessors who identified a difference between the Comparative Example C and Example 4 noticed the difference as a sandier mouth-feel of the ice cream composition of Comparative Example C than the ice cream composition of Example 4.

Of 8 trained assessors 4 noticed a difference between the ice cream compositions of Example 4 and of Example 5, while 4 trained assessors did not notice a difference.

Table 5

| sample A | sample B | identified | not identified | n |
|---|---|---|---|---|
| Comparative Example B | Example 3 | 6 | 1 | 7 |
| Example 2 | Example 3 | 4 | 4 | 8 |
| Comparative Example C | Example 4 | 5 | 2 | 7 |
| Comparative Example C | Example 5 | 4 | 3 | 7 |
| Example 5 | Example 4 | 4 | 4 | 8 |
| n: total number of trained assessors<br>identified: number of assessors who correctly identified the odd sample<br>not identified: number of assessors who did not identify the odd sample | | | | |

Creaminess and Wateriness of Ice Cream

At least 6 trained assessors participated in a test for evaluating organoleptic properties of ice cream samples according to the German standard DIN10967-1:1999-10, among others creaminess and wateriness. The ice cream samples were presented to them coded with a three-digit number code in a random order. About 30 g of each sample was served. The panelists tasted the different ice cream samples in parallel so that a direct comparison was possible. The cold ice cream that had a temperature of -18 ° C was stored in a box made of Styrofoam™ foam with ice packs to keep it cold. As soon as the tasting started, the ice cream was poured into glasses and handed directly to the panelists. The panelist could re-order fresh ice cream if their sample had already melted during the assessment. Water and plain bread (consisting only of wheat starch and water) were served as palate neutralizer. The test room was equipped according to the requirements of the German standard DIN 10962:1997. The assessors were selected, trained, and monitored according to the respective German standards (DIN 10961:1996-08, DIN 10959: 1998-07). The scores of creaminess and wateriness are listed in Table 6 below.

Table 6

| score | creamy | watery |
|---|---|---|
| 0 | not creamy | not watery |
| 1 | very slightly creamy | very slightly watery |
| 2 | slightly creamy | slightly watery |
| 3 | creamy | watery |
| 4 | very creamy | very watery |
| 5 | extremely creamy | extremely watery |

Comparative Example E had the best organoleptic properties of the reference samples (the reference samples included Comparative Example E, Comparative D and the Control Mix without stabilizers). The properties of the Comparative Examples D and E as well as of the Control Mix without stabilizers are given in Table 7 below. The creaminess of Comparative Example E was defined as score 3; the wateriness of Comparative Example E was defined as score 0.

In subsequent tests, assessors tested and ranked the samples of Examples 2-5 and of Comparative Examples B and C against Comparative Example E to ensure comparability of the results. These results are also listed in Table 7 below.

Table 7

| (Comp.) Ex, | Stabilizer composition | creamy | watery |
|---|---|---|---|
| Control Mix | --- | 0.1 | 3.8 |
| D | 63% CMC, 27% Guar, 10% κ-carrageenan | 1.7 | 1.6 |
| E | 63% Locust Bean Gum, 27% Guar, 10% κ-carrageenan | 3 | 0 |
| 2 | 45% A4M, 45% CMC, 10% κ-carrageenan | 4.1 | 0.0 |
| 3 | 72% A4M, 18% CMC, 10% κ-carrageenan | 3.3 | 0.0 |
| B | 90% A4M, 10% κ-carrageenan | 3.2 | 0.3 |
| 4 | 45% A40M, 45% CMC, 10% κ-carrageenan | 3.4 | 0.0 |
| 5 | 72% A40M, 18% CMC, 10% κ-carrageenan | 2.7 | 0.3 |
| C | 90% A40M, 10% κ-carrageenan | 2.7 | 0.4 |

The comparison of Examples 2 and 3 with Comparative Example B and the comparison of Examples 4 and 5 with Comparative Example C illustrate that the desired creaminess of the ice cream composition is increased and/ or the undesired wateriness of the ice cream composition is decreased when methylcellulose, CMC and carrageenan are used in combination as a stabilizer composition instead of a combination of only methylcellulose and carrageenan.

Example 6

An ice cream is prepared as described further above using the stabilizer composition listed in Table 9. The ice cream of Example 6 is tested in a hedonic taste test as described below together with Examples 2 and 3 and Comparative Example E.

Hedonic taste test

Hedonic tests are subjective tests with untrained participants. At least 30 participants were asked to taste ice cream samples (about 50 g) blindly and to fill out an anonymous questionnaire about their acceptance of the sample.

The participants were asked to rank their liking on a scale from 1 to 9, as shown in Table 8 below. The scale of liking can be segmented into the "LIKE" area (score 9-6), "NEUTRAL" answer (score 5), and the "DISLIKE" area with scores 4-1. Each volunteer could only participate once. The results are listed in Table 9 below.

Table 8: Hedonic scale for liking

| Score | Liking | Segments |
|-------|--------|----------|
| 1 | Dislike extremely | |
| 2 | Dislike very much | DISLIKE |
| 3 | Dislike moderately | |
| 4 | Dislike slightly | |
| 5 | Neither like or dislike | NEUTRAL |
| 6 | Like slightly | |
| 7 | Like moderately | LIKE |
| 8 | Like very much | |
| 9 | Like extremely | |

Table 9

| (Comp.) Example | Stabilizer composition | Average Score | % in LIKE |
|-----------------|------------------------|---------------|-----------|
| E | 63% Locust Bean Gum, 27% Guar, 10% κ-carrageenan | 5.5 | 59 |
| 2 | 45% A4M, 45% CMC, 10% κ-carrageenan | 6.9 | 86 |
| 3 | 72% A4M, 18% CMC, 10% κ-carrageenan | 6.9 | 83 |
| 6 | 27% A4M, 63% CMC, 10% κ-carrageenan | 6.6 | 83 |

The results in Table 9 illustrate that ice creams comprising the stabilizer composition of the present invention are more liked by consumers and are liked by more consumers than a comparable ice cream of Comparative Example E which comprises a stabilizer composition that is commonly used in ice creams.

**Claims**

1. A stabilizer composition for food and beverage products comprising

    (a) from 15 to 85 weight percent of a methylcellulose,
    (b) from 10 to 80 weight percent of a carboxymethyl cellulose, and
    (c) from 5 to 20 weight percent of a carrageenan, all percentages being based on the total weight of (a), (b) and (c).

2. The stabilizer composition of claim 1 comprising (a) from 20 to 70 weight percent of a methylcellulose, (b) from 20 to 70 weight percent of a carboxymethyl cellulose, and (c) from 6 to 15 weight percent of a carrageenan.

3. The stabilizer composition of claim 1 or claim 2 wherein the sum of the weights of (a), (b) and (c) amounts to at least 60 percent of the total weight of the stabilizer composition.

4. The stabilizer composition of any one of claims 1 to 3 wherein the weight ratio between the methylcellulose (a) and the carboxymethyl cellulose (b), $w$(a)/$w$(b), is (0.7 - 1.5) / 1.0.

5. The stabilizer composition of any one of claims 1 to 4 wherein the methylcellulose (a) has a viscosity of from 500 to 60,000 mPa·s, determined in a 2 % by weight aqueous solution at 20°C using an Ubbelohde capillary viscometer.

6. The stabilizer composition of claim 5 wherein the methylcellulose (a) has a viscosity of from 700 to 25,000 mPa·s.

7. The stabilizer composition of any one of claims 1 to 6 wherein the methylcellulose has a degree of the methoxyl substitution, DS(methoxyl), of from 1.50 to 2.25.

8. A food or beverage product comprising

(a) from 0.02 to 0.30 weight percent of a methylcellulose,
(c) from 0.01 to 0.1 weight percent of a carrageenan, all percentages being based on the total weight of the food or beverage product.

9. A food or beverage product of claim 8 comprising from 0.02 to 2 weight percent of the stabilizer composition of any one of claims 1 to 7, based on the total weight of the food or beverage product.

10. The food or beverage product of claim 8 or 9 comprising from 5 to 50 weight percent of one or more mono-, di- and/or oligosaccharides, based on the total weight of the food or beverage product.

11. The food or beverage product of any one of claims 8 to 10 comprising from 1 to 20 weight percent of one or more proteins, based on the total weight of the food or beverage product.

12. The food or beverage product of any one of claims 8 to 11 comprising from 1 to 25 weight percent of one or more milk solids not-fat, based on the total weight of the food or beverage product.

13. The food or beverage product of any one of claim 8 to 12 comprising from 0 to 30 weight percent of one or more fats, based on the total weight of the food or beverage product.

14. The food or beverage product of any one of claims 8 to 13 comprising from 30 to 90 weight percent of water, based on the total weight of the food or beverage product.

15. The food product of any one of claims 8 to 14 being a food product designed for frozen consumption or a frozen or semi-frozen food product.

**Patentansprüche**

1. Stabilisatorzusammensetzung für Lebensmittel und Getränkeprodukte, enthaltend:

(a) 15 bis 85 Gew.-% einer Methylcellulose,
(b) 10 bis 80 Gew.-% einer Carboxymethylcellulose und
(c) 5 bis 20 Gew.-% eines Carrageenans, wobei sich alle Prozentangaben auf das Gesamtgewicht von (a), (b) und (c) beziehen.

2. Stabilisatorzusammensetzung nach Anspruch 1, enthaltend (a) 20 bis 70 Gew.-% einer Methylcellulose, (b) 20 bis 70 Gew.-% einer Carboxymethylcellulose und (c) 6 bis 15 Gew.-% eines Carrageenans.

3. Stabilisatorzusammensetzung nach Anspruch 1 oder 2, wobei die Summe der Gewichte von (a), (b) und (c) sich zu wenigstens 60 Prozent des Gesamtgewichts der Stabilisatorzusammensetzung addieren.

4. Stabilisatorzusammensetzung nach einem der Ansprüche 1 bis 3, wobei das Gewichtsverhältnis zwischen der Methylcellulose (a) und der Carboxymethylcellulose (b), w(a)/w(b) 0,7 - 1,5/1,0 beträgt.

5. Stabilisatorzusammensetzung nach einem der Ansprüche 1 bis 4, wobei die Methylcellulose eine Viskosität von 500 bis 60.000 mPa·s aufweist, bestimmt in einer 2 Gew.-%igen wässrigen Lösung bei 20 °C unter Verwendung eines Ubbelhode Kapilarviskosimeters.

6. Stabilisatorzusammensetzung nach Anspruch 5, wobei die Methylcellulose (a) eine Viskosität von 700 bis 25.000 mPa·s aufweist.

7. Stabilisatorzusammensetzung nach einem der Ansprüche 1 bis 6, wobei die Methylcellulose ein Gehalt an Methoxylsubstitution DS(methoxyl) von 1,50 bis 2.25 aufweist.

8. Lebensmittel- oder Getränkeprodukt enthaltend

   (a) 0,02 bis 0,30 Gew.-% einer Methylcellulose, (b) 0,03 bis 0,30 Gew.-% einer Carboxymethylcellulose und (c) 0,01 bis 0,10 Gew.-% eines Carrageenans, wobei sich alle Prozentangaben auf das Gesamtgewicht des Lebensmittel- oder Getränkeprodukts beziehen.

9. Lebensmittel- oder Getränkeprodukt nach Anspruch 8, enthaltend 0,02 bis 2 Gew.-% der Stabilisatorzusammensetzung nach einem der Ansprüche 1 bis 7, bezogen auf das Gesamtgewicht des Lebensmittel- oder Getränkeprodukts.

10. Lebensmittel- oder Getränkeprodukt nach Anspruch 8 oder 9, enthaltend 5 bis 50 Gewichtsprozent eines oder mehrerer Mono-, Di- und/oder Oligosacchariden, bezogen auf das Gesamtgewicht des Lebensmittel- oder Getränkeprodukts.

11. Lebensmittel- oder Getränkeprodukt nach einem der Ansprüche 8 bis 10, enthaltend 1 bis 20 Gew.-% eines oder mehrerer Proteine, bezogen auf das Gesamtgewicht des Lebensmittel- oder Getränkeprodukts.

12. Lebensmittel- oder Getränkeprodukt nach einem der Ansprüche 8 bis 11, enthaltend 1 bis 25 Gew.-% eines oder mehrerer nicht fettbasierten Milchfeststoffe, bezogen auf das Gesamtgewicht des Lebensmittel- oder Getränkeprodukts.

13. Lebensmittel- oder Getränkeprodukt nach einem der Ansprüche 8 bis 12, enthaltend 0 bis 30 Gew.-% eines oder mehrerer Fette, bezogen auf das Gesamtgewicht des Lebensmittel- oder Getränkeprodukts.

14. Lebensmittel- oder Getränkeprodukt nach einem der Ansprüche 8 bis 13, enthaltend 30 bis 90 Gew.-% Wasser, bezogen auf das Gesamtgewicht des Lebensmittel- oder Getränkeprodukts.

15. Lebensmittelprodukt nach einem der Ansprüche 8 bis 14, das ein Lebensmittelprodukt ist, das dazu gedacht ist im gefrorenen Zustand konsumiert zu werden oder ein gefrorenes oder halbgefrorenes Lebensmittelprodukt ist.

## Revendications

1. Une composition stabilisante destinée à des produits à manger et à boire comprenant

   (a) de 15 à 85 pour cent en poids d'une méthylcellulose,
   (b) de 10 à 80 pour cent en poids d'une carboxyméthyl cellulose, et
   (c) de 5 à 20 pour cent en poids d'un carraghénane, tous les pourcentages étant rapportés au poids total de (a), (b) et (c).

2. La composition stabilisante de la revendication 1 comprenant (a) de 20 à 70 pour cent en poids d'une méthylcellulose, (b) de 20 à 70 pour cent en poids d'une carboxyméthyl cellulose, et (c) de 6 à 15 pour cent en poids d'un carraghénane.

3. La composition stabilisante de la revendication 1 ou de la revendication 2 dans laquelle la somme des poids de (a), (b) et (c) s'élève à au moins 60 pour cent du poids total de la composition stabilisante.

4. La composition stabilisante de l'une quelconque des revendications 1 à 3 dans laquelle le rapport en poids entre la méthylcellulose (a) et la carboxyméthyl cellulose (b), $w$(a)/w(b), est de (0,7 à 1,5)/1,0.

5. La composition stabilisante de l'une quelconque des revendications 1 à 4 dans laquelle la méthylcellulose (a) a une viscosité allant de 500 à 60 000 mPa•s, déterminée dans une solution aqueuse à 2 % en poids à 20 °C à l'aide d'un viscosimètre capillaire Ubbelohde.

6. La composition stabilisante de la revendication 5 dans laquelle la méthylcellulose (a) a une viscosité allant de 700 à 25 000 mPa·s.

7. La composition stabilisante de l'une quelconque des revendications 1 à 6 dans laquelle la méthylcellulose a un degré de la substitution méthoxyle, DS(méthoxyle), allant de 1,50 à 2,25.

8. Un produit à manger ou à boire comprenant

   (a) de 0,02 à 0,30 pour cent en poids d'une méthylcellulose,
   (b) de 0,03 à 0,30 pour cent en poids d'une carboxyméthyl cellulose, et
   (c) de 0,01 à 0,1 pour cent en poids d'un carraghénane, tous les pourcentages étant rapportés au poids total du produit à manger ou à boire.

9. Un produit à manger ou à boire de la revendication 8 comprenant de 0,02 à 2 pour cent en poids de la composition stabilisante de l'une quelconque des revendications 1 à 7, rapporté au poids total du produit à manger ou à boire.

10. Le produit à manger ou à boire de la revendication 8 ou de la revendication 9 comprenant de 5 à 50 pour cent en poids d'un ou de plusieurs mono-, di- et/ou oligosaccharides, rapporté au poids total du produit à manger ou à boire.

11. Le produit à manger ou à boire de l'une quelconque des revendications 8 à 10 comprenant de 1 à 20 pour cent en poids d'une ou de plusieurs protéines, rapporté au poids total du produit à manger ou à boire.

12. Le produit à manger ou à boire de l'une quelconque des revendications 8 à 11 comprenant de 1 à 25 pour cent en poids d'un ou de plusieurs extraits secs dégraissés du lait, rapporté au poids total du produit à manger ou à boire.

13. Le produit à manger ou à boire de l'une quelconque des revendications 8 à 12 comprenant de 0 à 30 pour cent en poids d'une ou de plusieurs matières grasses, rapporté au poids total du produit à manger ou à boire.

14. Le produit à manger ou à boire de l'une quelconque des revendications 8 à 13 comprenant de 30 à 90 pour cent en poids d'eau, rapporté au poids total du produit à manger ou à boire.

15. Le produit à manger de l'une quelconque des revendications 8 à 14, lequel est un produit à manger conçu pour se consommer congelé ou un produit à manger congelé ou semi-congelé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1171471 A
- US 6673384 B
- WO 2012152908 A
- US 5215777 A
- GB 2395413 A
- US 2009142469 A1
- US 2011033599 A1
- WO 2010117781 A

**Non-patent literature cited in the description**

- **ARBUCKLE, W.S.** Ice Cream. 1986, vol. 6, 84-92
- *Official Journal of the European Communities L 10/53,* 12 January 2002